Europäisches Patentamt

European Patent Office

Office européen des brevets

(19)

(11) Publication number : **0 601 802 A1**

## (12) EUROPEAN PATENT APPLICATION

(21) Application number : 93309688.5

(51) Int. Cl.⁵ : **A23J 3/34**, A23C 9/146

(22) Date of filing : 03.12.93

(30) Priority : **10.12.92 FI 925620**

(43) Date of publication of application :
**15.06.94 Bulletin 94/24**

(84) Designated Contracting States :
**DE DK FR GB NL SE**

(71) Applicant : **VALIO LTD.**
**Meijeritie 4**
**SF-00100 Helsinki (FI)**

(72) Inventor : **Tossavainen, Ossi**
**Koroistentie 7 A 10**
**SF-00280 Helsinki (FI)**
Inventor : **Outinen, Marko**
**Servin-Maijan tie 1 C 20**
**SF-02150 Espoo (FI)**

(74) Representative : **Hale, Stephen Geoffrey**
**J.Y. & G.W. Johnson**
**Furnival House**
**14/18 High Holborn**
**London WC1V 6DE (GB)**

(54) **A method for removing allergenic compounds from a protein blend, a product so obtained and use thereof.**

(57)   To remove allergenic compositions from proteinaceous compositions, the protein present in the proteinaceous composition is decomposed with proteolytic enzymes into protein hydrolysate, the hydrolysate thus obtained is clarified and the clear solution is recovered, the hydrolysate solution obtained is passed into a column filled with adsorption resin and eluted with water, the solutions which have passed through the column and wherefrom allergenic compounds have been removed (or which have a substantially reduced amount of allergenic compounds) are recovered, if necessary salts are removed from the recovered solutions, and the recovered solutions are concentrated and if desired dried. The proteinaceous compositions thus obtained, which are substantially free of allergenic compounds, may be used in mother's milk substitutes and special nutritive preparations, or as components thereof.

EP 0 601 802 A1

The present invention relates to a method for removing allergenic compounds from proteinaceous compositions, to provide a very neutral-tasting, nearly flavourless, proteinaceous composition wherefrom allergenic compounds have been removed either totally or at least for the most part, a proteinaceous composition thus obtained and the use thereof. Such a composition is very well suited for use in mother's milk substitutes for patients suffering from milk or soy allergy, for instance. It is likewise suitable for use in clinical nutrient preparations in which protein decomposed into peptides is needed but no macropeptide structures should be present.

Milk or soy allergy is normally an infant disease. Milk allergy is generally found with approx. 0.5-7% of newborns, in Finland the occurrence is about 2-3% of newborns (S. Similä et al., *Suomen Lääkärilehti* (Finnish Medical Journal) 45 (11) (1990) pp. 1039-1042). In general, the infant becomes sensitized to cow milk protein during the first years of its life with the intake of foreign cow milk protein in its diet. Even small quantities of protein may induce this sensitization; for example mother's milk may contain cow milk protein taken in by the mother in an amount causing the infant to become sensitized to the protein. Often, however, the cause for allergy is cow milk or commercial substitutes for mother's milk. Since the wall of the small intestine of an infant is not fully developed yet, it is also permeable to large-molecule proteins and fractions thereof, as a result of which the infant becomes sensitized to these proteins and the development of the intestinal wall is disturbed. Milk products can induce in allergics strong reactions, including vomiting, rhinitis and coughing symptoms, diarrhea, hives, tickling, difficulty in breathing, intestinal symptoms and, in the worst case, an anaphylactic shock. When the allergic symptoms are prolonged, usually also the infant's growth is disturbed. With appropriate treatment, the allergy normally disappears by the third year of the infant's life. Up to that age, however, it presents a serious problem, since milk is an essential source of nourishment to sucklings. A milk-free diet is often observed in the treatment of the allergy, and soy milk is substituted for cow milk. However, about 30% of the users of soy milk become sensitized to soy protein. For this reason, certain mother's milk substitutes which are based on protein hydrolysates and whose protein has been enzymatically decomposed into small peptides and free amino acids have already been developed.

In mother's milk substitutes and special nutritive preparations for milk and soy allergics, the allergizing proteins and antigenic degradation products, i.e. macropeptides, must be eliminated as completely as possible.

It is commonly known that hypoallergenic protein can be produced by enzymatic hydrolyzation of the protein into small peptides and free amino acids and by separating the non-decomposed proteins and macropeptides by ultrafiltration (Takase et al., *J. Dairy Sci. 62* (1978) pp. 1570-1576, Jost et al., *Food Techn. 41* (10) (1987) p. 118, Mannheim et al., *J. Food Sci. 55* (2) (1990) pp. 381-390). However, the primary problems relative to the hydrolysates thus produced are a) bitter or unpleasant taste and b) partly non-decomposed protein structures which may cause symptoms particularly in sensitive patients.

To avoid these problems, some manufacturers have employed activated carbon treatment to improve the taste of the hydrolysate, and thereby also the taste of the product to be prepared therefrom, and to remove macropeptides from the hydrolysate (J. Knights, Processing and Evaluation of the Antigenicity of Protein Hydrolysates, in *Nutrition for Special Needs in Infancy,* ed. F. Lifshitz, Marcel Dekker, New York 1985, pp. 105-115). This known method, however, is attended by the disadvantage that only about half of the large-molecule proteins present in the protein hydrolysate are removed by activated carbon treatment; in the above article by J. Knights, the amount of large-molecule proteins was reduced in activated carbon treatment from 2.4 µg to 1.3 µg of casein equivalents/g. It is also to be noted that often activated carbon cannot be regenerated for reuse, and, furthermore, the small proteins adsorbed on the activated carbon diminish the total yield.

Now it has been surprisingly found that macro-peptides can be effectively removed from proteinaceous compositions by means of an adsorption resin. The resin is capable of adsorbing macropeptide structures, such as peptide structures inducing allergy in certain individuals, and simultaneously removing embittering peptides from the hydrolysate.

It is an essential advantage of this novel method over activated carbon treatment that adsorption resin is capable of diminishing the residual protein equivalent content of hydrolysate to a far lower level than that reported for activated carbon treatment in the literature, and on the other hand the adsorption resin endures re-regeneration even for several years, which makes the treatment advantageous.

The method of the invention is well suited to treatment of hydrolysates prepared from various protein sources (e.g. whey protein, casein or soy protein), and, furthermore, hydrolysates having various protein concentrations (tot. N x 6.38) can be treated by the method.

The object of the invention is thus a method for removing allergenic compounds from proteinaceous compositions, characterized in that

    a) the protein present in the proteinaceous composition is decomposed with proteolytic enzymes into protein hydrolysate having a degree of hydrolysis ($\alpha$-amino-N/tot. N) of 20-60%,

b) the hydrolysate thus obtained is clarified, preferably by centrifugation or ultrafiltration, and the clear solution is recovered,

c) the hydrolysate solution obtained is passed into a column filled with adsorption resin at a flow rate of 0.2-4 column volumes per hour at a temperature of 5-70 °C,

d) to conclude the resin treatment, the column is eluted with water having a temperature of 5-70 °C,

e) the solutions that have passed through the column are recovered,

f) if necessary, salts are removed from the recovered solutions, and

g) the recovered solutions are concentrated to a dry solids content of 40-70% and, if desired, dried.

In the first step of the process, the protein present in the proteinaceous composition is decomposed with a proteolytic enzyme to provide a degree of hydrolysis ($\alpha$-amino-N/tot. N) of 20-60%.

The proteinaceous composition to be treated may be any proteinaceous composition, such as a solution comprising whey protein, casein or soy protein. In whey protein powder, the protein content may vary within the range 35-85% by weight. A typical protein content for soy protein powder is 52-90% by weight.

The protein content of the starting material affects the protein content of the product. If one desires the product to be as high in protein and as low in e.g. lactose as possible, the starting material should be as rich in protein as possible.

The proteolytic enzyme may be for example trypsin, pancreatin or microbial protease, or a combination of these. A suitable microbial protease enzyme is e.g. Alcalase 0.6 L (Novo, Denmark), which is produced by *Bacillus licheniformis.*

After the enzymatic hydrolysis, the protein hydrolysate is clarified, preferably by centrifugation or ultra-filtration, to remove non-decomposed protein and macropeptides, and the clear solution is recovered.

The recovered clear hydrolysate solution can, if desired, be concentrated by evaporation. In that case, a suitable dry solids content is 10-30% by weight. The resultant concentrate can be conveyed directly to further treatment or stored at +5 °C before further treatment. If desired, the concentrate can also be dried into a powder for instance with a spray drier prior to further treatment. In that case, however, it is evaporated to a dry solids content of 30-50% by weight prior to drying.

Before the adsorption resin treatment, the protein hydrolysate concentrate or powder is dissolved in hot water, preferably to provide a solution having a dry solids content of 10-30% by weight.

In the adsorption resin treatment, macropeptides present in the hydrolysate solution obtained in accordance with the above, which induce allergy in certain individuals, are adsorbed into the resin by passing the hydrolysate solution into a column filled with adsorption resin at a rate of 0.2-4 column volumes per hour.

In the adsorption resin treatment, the amount of hydrolysate solution passed into the resin-filled column can be as high as 5000 l, with respect to dry solids, of a 10% hydrolysate solution per 100 l of resin; preferably a hydrolysate solution having 40-500 g of dry solids per 100 ml of resin is passed into the resin-filled column.

The adsorption resin treatment may be carried out at a pH of 2-10, preferably 5.5-7.5, for the clarified hydrolysate solution. However, the most preferred method is to treat with resin a neutral solution having a pH of 6.5-7.0, since in that case no pH adjustment is needed after the hydrolysis step, and the salt content of the product will be lower. However, if desired the pH of the solution can be adjusted with citric acid, food-grade HCl or a mixture of NaOH, KOH and $Ca(OH)_2$, for instance.

The adsorption resin employed may be of any type, including polystyrene-based hydrophobic resin, such as Amberlite XAD-16 or XAD-761, manufactured by Rohm & Haas (France). Prior to passing of the hydrolysate solution into the resin-filled column, the resin is regenerated by methods known per se.

The resin treatment can usually be conducted at a temperature of 5-70 °C. The most preferable resin treatment temperature is about 30 °C, at which no additional energy is needed for cooling or heating the solution.

To conclude the resin treatment, the column is eluted with water at a temperature of 5-70 °C, preferably about 30 °C, at the same flow rate at which the protein hydrolysate solution was passed into said column previously.

The method can thus be realized either so that the resin treatment is carried out immediately after the hydrolysis step, or so that the resin treatment is carried out later.

Subsequent to the resin treatment, the solutions which have passed through the column and wherefrom allergenic compounds have been removed, or which at least have a substantially reduced amount of allergenic compounds, are recovered.

In the adsorption resin treatment, the composition of the hydrolysate undergoes only a slight change. Table 1 shows the composition of dried hydrolysate prior to and after adsorption resin treatment with XAD-16 resin.

Table 1: Composition of hydrolysate

| Component | prior to treatment | after treatment |
|---|---|---|
| Water, % | 4.9 | 5.2 |
| Fat, % | 0.4 | 0.6 |
| Lactose, % | 56.2 | 59.2 |
| Protein (Nx6.38), % | 23.3 | 19.5 |
| Ash, % | 5.9 | 6.2 |
| Na, mg/kg | 8200 | 9200 |
| K, mg/kg | 18000 | 18800 |
| Ca, mg/kg | 3300 | 3000 |
| Cl, mg/kg | 6500 | 7400 |
| P, mg/kg | 3000 | 3300 |
| $\alpha$-amino-N/ total N (%) | 49.6 | 52.0 |

| Amino acid composition (% of protein) | Prior to treatment | After treatment | FAO refer. protein |
|---|---|---|---|
| Aspartic acid | 9.5 | 11.1 | |
| Threonine | 6.6 | 6.8 | 4.0 |
| Serine | 4.6 | 5.0 | |
| Glutamic acid | 16.8 | 20.0 | |
| Proline | 6.1 | 5.9 | |
| Glycine | 2.0 | 2.0 | |
| Alanine | 5.0 | 5.3 | |
| Valine | 5.7 | 6.2 | 5.0 |
| Methionine+cysteine | 3.8 | 4.0 | 3.5 |
| Isoleucine | 6.5 | 4.9 | 4.0 |
| Leucine | 10.9 | 10.3 | 7.0 |
| Tyrosine | 4.1 | 3.2 ⎫ | |
| Phenylalanine | 4.1 | 2.4 ⎭ | 6.0 |
| Lysine | 9.0 | 9.9 | 5.5 |
| Histidine | 1.8 | 2.3 | |
| Arginine | 3.1 | 3.6 | |

About 25% of the amino acids present in the hydrolysates were in the form of free amino acids prior to the adsorption resin treatment and also thereafter, and thus the resin had no effect on the proportion of free amino acids.

Table 1 shows that the protein content of the product is slightly reduced in the resin treatment, but in principle other hydrolysate components than protein are passed directly through the column. The degree of hydrolysis ($\alpha$-amino-N/tot. N) increases somewhat in the treatment, which also indicates that primarily macropeptides are retained by the resin. Further, the amino acid profile changes very little; only the combined amount of tyrosine and phenylalanine falls below the percentage recommended by the FAO. This can, however, easily be corrected by adding the necessary amount of phenylalanine into the hydrolysate after treatment.

The yield from the resin treatment was 87% with respect to dry solids and the yield from the overall hydrolysate preparation process was 81%, and thus the resin treatment did not significantly impair the yield of the process in relation to the advantage afforded.

If necessary, salts - such as excess chloride or sodium - are removed from the recovered solutions that are substantially free of allergenic compounds, by electrodialysis for instance.

Finally, the recovered solutions are concentrated to a dry solids content of 40-70% by weight and, if desired, they can be dried into a powder by freeze or spray drying.

The advantageousness of the method of the invention is enhanced by the fact that the spent adsorption resin can be reused after regeneration.

Peptides comprising the main component of whey proteins, i.e. $\beta$-lactoglobulin (B-LG), or intact structures thereof can be accurately analyzed by the ELISA method (Enzyme-linked immunosorbent assay), which is capable of detecting very low concentrations. The ELISA method is commonly used when one desires to assay for whey protein residues present in mother's milk, for instance. This method is also capable of detecting the possible presence of allergenic $\beta$-lactoglobulin and intact fractions thereof in mother's milk substitutes for use by milk allergics.

Measured by the ELISA method, the B-LG equivalent content of whey protein hydrolysate and its bitterness vary depending on the post-treatment as follows:

Table 2: B-LG equivalent content in hydrolysate and its bitterness

| Treatment | Bitterness (0 - 4) | B-LG content ($\mu$g/g d.s.) |
|---|---|---|
| whey prot. hydrol. w/o post-treatment | 3 | 400 |
| whey prot. hydrol. + ultrafiltration (20000 cut-off) | 3 | 0.82 |
| whey prot. hydrol. + ultrafiltration (6000 cut-off) | 3 | 0.30 |
| whey prot. hydrol. + ultrafiltration (20000 cut-off) + adsorption resin treatm. | 0 | 0.002-0.01 |

In relation to the value 1.3 $\mu$g/g achieved by treatment of casein hydrolysate with activated carbon as set forth in the literature (Knights et al., 1985), adsorption resin treatment accomplished a considerably lower antigen level in the product. The adsorption resin treatment decreased the B-LG equivalent content of the hydrolysate about 80-400-fold, while treatment with activated carbon as reported in the above publication achieved about 2-fold decrease. The B-LG equivalent content of the resin-treated hydrolysate was generally at the same level regardless of e.g. the protein content of the hydrolysate. Thus the method is particularly suitable for protein-rich hydrolysates, wherewith the lowest B-LG equivalent content relative to the quantity of protein is achieved.

Reducing the B-LG equivalent content by ultra-filtration with a 6000 cut-off membrane is not practical, as in that case the flow rate of the permeate decreases, the efficiency of the process is considerably impaired, and the yield is diminished relative to that obtained with a 20000 cut-off membrane.

Most probably the residual content of protein components other than B-LG (such as $\alpha$-lactalbumin, bovine serum albumin and immunoglobulins) also decreases in adsorption resin treatment. This could not be monitored, however, since no ELISA method for other protein fractions was available.

The invention also relates to a proteinaceous composition wherefrom allergenic compounds have been removed either totally or at least in large part and which has been prepared by the method of the invention. This composition can be used in special nutritive preparations or as components thereof.

The invention further relates to the use of a proteinaceous composition thus obtained, which is substantially free of allergenic compounds, in mother's milk substitutes, special nutritive preparations or as components thereof.

In the following examples, the invention will be set forth in greater detail.

## Example 1

A) 100 kg of a whey protein powder comprising 75% of protein were dissolved in 1900 l of water at 50 °C (5% solution with respect to powder). The solution was heated to 90 °C for 10 minutes with simultaneous stirring and cooled down to 50 °C. The pH was adjusted with 5 M $Ca(OH)_2$ to 8.5. Pancreatin (4xUSP, Scientific Protein Laboratories, Inc., USA) and Alcalase 0.6 L (Novo, Denmark) enzymes were added, and the solution was allowed to hydrolyze to provide a degree of hydrolysis ($\alpha$-amino-N/tot. N) of 39%. In the course of the hydrolysis, the pH was allowed to drop to 7.0, at which value it was maintained with 10% $Ca(OH)_2$. Subsequent to the hydrolysis, the solution was heated to 95 °C, 5 min. The solution was cooled to 40 °C and ultrafiltered with a 20000 cut-off membrane. The resultant permeate was collected and evaporated to a dry solids content of about 10%. The degree of hydrolysis ($\alpha$-amino-N/tot. N) was 40.3%. The concentrate was stored refrigerated at 5 °C.

B) 30 $cm^3$ of regenerated XAD-16 adsorption resin (Rohm & Haas) were packed into a laboratory-scale column, which was tempered to 30 °C. 126 $cm^3$ of hydrolysate concentrate, corresponding to 42 g of hydrolysate dry solids per 100 $cm^3$ of resin, were heated to 30 °C. At this point, the pH of the solution was 6.5-7.0 and needed no adjustment. The solution was passed into the column at a rate of 30 ml/h. Finally, the column was eluted with 40 $cm^3$ of water at 30 °C. The solutions were combined and lyophilized into a powder.

Prior to the resin treatment, the B-LG equivalent content of the hydrolysate was 3.9 $\mu$g/g of dry solids, and after the resin treatment the content was 0.01 $\mu$g/g of dry solids, and thus the B-LG content was reduced 390-fold in the treatment. The powder had a neutral taste and was not at all bitter.

The composition of the hydrolysate prior to resin treatment and thereafter is shown in Table 3.

Table 3: Hydrolysate composition prior to and after resin treatment

| Component | Prior to treatment | After treatment |
|---|---|---|
| Protein % of d.s. | 72.6 | 68.5 |
| Lactose % of d.s. | 5.5 | 5.8 |
| Ash % of d.s. | 6.4 | 6.6 |
| Na mg/kg d.s. | 4100 | 4700 |
| K mg/kg d.s. | 8500 | 9300 |
| Ca mg/kg d.s. | 13800 | 14300 |
| Cl mg/kg d.s. | 4100 | 2600 |
| P mg/kg d.s. | 1800 | 2100 |
| $\alpha$-amino-N/tot. N (%) | 40.3 | 43.8 |

## Example 2

The procedure was as described in Item A in Example 1, except that the concentrate was evaporated to a dry solids content of 50% and dried into a powder by spray drying.

## Example 3

A powder as prepared in Example 2 was dissolved in water to provide a 10% solution. The temperature was adjusted to 30 °C, and 126 $cm^3$ of a 10% solution were passed through a regenerated 30 $cm^3$ XAD-16 column following the process as outlined in Example 1B. The solutions were combined and dried into a powder. The B-LG equivalent content had diminished as in Example 1B, and the product had a neutral taste with no bitterness.

### Example 4

126 cm$^3$ of a hydrolysate prepared in Item A in Example 1 were passed into a regenerated XAD-16 column in accordance with Item B in Example 1, but the pumping rate was now 120 cm$^3$/h. The solutions were dried into a powder by lyophilization.

The B-LG equivalent content of the treated hydrolysate was 0.01 $\mu$g/g of dry solids, that is, the decrease was 390-fold. The product had a neutral taste and was not at all bitter.

### Example 5

Casein hydrolysate was prepared following the process as outlined in Item A in Example 1. A 10 % concentrate was treated in the same manner as in Item B in Example 1. The solutions were collected and lyophilized into a powder.

Prior to the resin treatment the casein hydrolysate comprised 0.16 $\mu$g of B-LG equivalents per g of dry solids and after the treatment 0.01 $\mu$g per g of dry solids, which means that the B-LG content was reduced 16-fold. At the same time, the bitterness of the casein hydrolysate disappeared, and the product was nearly tasteless.

The B-LG present in the casein hydrolysate had been introduced as a contamination from the casein preparation process. It may have been derived from the complex formation between B-LG and kappa-casein induced by the pasteurization of the milk.

### Example 6

A hydrolysate as prepared in Item A in Example 1 was treated in accordance with Item B in Example 1 with an adsorption resin, but the resin was of the type XAD-761 (Rohm & Haas). The treatment reduced the B-LG content of the hydrolysate from 3.9 to 0.04 $\mu$g/g of dry solids, that is, the decrease was 98-fold. The powder had a neutral taste and was not at all bitter.

### Example 7

Whey protein hydrolysate was prepared following the process as outlined in Item A in Example 1, but trypsin was used as the sole enzyme. 126 cm$^3$ of the hydrolysate obtained were passed into a regenerated 30 cm$^3$ XAD-16 column at a rate of 30 ml/h at 30 °C. Finally, the column was eluted with 40 cm$^3$ of water at 30 °C, and the water was combined with the hydrolysate solution that had passed the column. The combined solution was lyophilized into a powder.

Prior to the resin treatment the hydrolysate comprised 0.19 $\mu$g of B-LG equivalents per g of dry solids and after the resin treatment 0.01 $\mu$g per g of dry solids, which means that the B-LG equivalent content was reduced 19-fold. The product had no bitter taste.

### Example 8

504 cm$^3$ of a hydrolysate as prepared in Item A in Example 1 were taken. This corresponds to 168 g of hydrolysate dry solids per 100 cm$^3$ of resin. The solution was run through a regenerated 30 cm$^3$ XAD-16 column at a rate of 60 ml/h at 30 °C. Finally, the column was eluted with 40 cm$^3$ of water at 30 °C; the water was combined with the hydrolysate that had passed the column. The combined solution was lyophilized into a powder.

Prior to the resin treatment the hydrolysate comprised 3.9 $\mu$g of B-LG equivalents per g of dry solids and after the resin treatment 0.02 $\mu$g per g of dry solids, that is, the decrease was 195-fold. The hydrolysate had a neutral taste and no bitterness.

### Example 9

The procedure was as described in Example 8, except that a three-fold quantity (= 1512 cm$^3$) of hydrolysate as a 10 % solution, i.e. 151.2 g/30 cm$^3$ of resin (= 504 g of hydrolysate dry solids per 100 cm$^3$ of resin), was passed into the column.

After the treatment, the dried hydrolysate still comprised only 0.01 $\mu$g of B-LG equivalent residues per g of dry solids, which means that the decrease was 390-fold, but now the treated powder had a clearly bitter taste.

Example 10

A hydrolysate solution as prepared in Example 1A was evaporated to a dry solids content of 20%. 63 cm³ of this concentrate were run through a regenerated 30 cm³ XAD-16 column at 65 °C at a rate of 120 cm³/h. This corresponds to 42 g of hydrolysate dry solids per 100 cm³ of resin. Finally, the column was eluted with 40 cm³ of water at 65 °C. The solutions were combined and dried into a powder. Prior to the resin treatment the B-LG equivalent content of the hydrolysate was 3.9 μg/g of dry solids and after the treatment 0.02 μg/g of dry solids, that is, the decrease was 195-fold. The hydrolysate had a neutral taste with no bitterness.

**Claims**

1. A method for removing allergenic compounds from proteinaceous compositions, **characterized** in that
   a) the protein present in the proteinaceous composition is decomposed with proteolytic enzymes into protein hydrolysate having a degree of hydrolysis (α-amino-N/tot. N) of 20-60%,
   b) the hydrolysate thus obtained is clarified, preferably by centrifugation or ultrafiltration, and the clear solution is recovered,
   c) the hydrolysate solution obtained is passed into a column filled with adsorption resin at a flow rate of 0.2-4 column volumes per hour at a temperature of 5-70 °C,
   d) to conclude the resin treatment, the column is eluted with water having a temperature of 5-70 °C,
   e) the solutions that have passed through the column are recovered,
   f) if necessary, salts are removed from the recovered solutions, and
   g) the recovered solutions are concentrated to a dry solids content of 40-70% and, if desired, dried.

2. A method as claimed in claim 1, **characterized** in that the proteinaceous composition is a solution comprising whey protein, casein or soy protein.

3. A method as claimed in claim 1 or claim 2, **characterized** in that the proteolytic enzyme employed is trypsin, pancreatin or microbial protease, or a combination of these.

4. A method as claimed in any one of claims 1 to 3, **characterized** in that the solution recovered from step b) is concentrated preferably to a dry solids content of 10-30% and, if desired, further dried into a powder which is dissolved in hot water prior to further treatment.

5. A method as claimed in any one of claims 1 to 4, **characterized** in that a hydrophobic polystyrene-based resin is employed as the adsorption resin.

6. A method as claimed in any one of claims 1 to 5, **characterized** in that a protein hydrolysate solution having a pH of 2-10, preferably 5.5-7.5, is passed through the column filled with adsorption resin.

7. A method as claimed in any one of claims 1 to 6, **characterized** in that a hydrolysate solution having 40-500 g of dry solids per 100 ml of resin is passed through the column filled with adsorption resin.

8. A method as claimed in any one of claims 1 to 7, **characterized** in that the resin treatment temperature is 30 °C.

9. A proteinaceous composition wherefrom allergenic compounds have been removed either totally or at least in large part, **characterized** in that it has been prepared by the method of any one of claims 1 to 8.

10. Use of a proteinaceous composition substantially free of allergenic compounds and prepared by the method of any one of claims 1 to 8 in mother's milk substitutes, special nutritive preparations, or as components thereof.

| European Patent Office | EUROPEAN SEARCH REPORT | Application Number |
|---|---|---|
| | | EP 93 30 9688 |

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X | US-A-3 646 193 (J.B. MICHAELSON AND J.W. SHORT) <br> * column 2; claims 1,2 * <br> * column 5 - column 6 * <br> --- | 1-4,6,9 | A23J3/34 <br> A23C9/146 |
| X | EP-A-0 090 406 (MEIJI SEIKA KAISHA LTD) <br> * page 8 - page 9; claims 2,3 * <br> --- | 1-3,9,10 | |
| X | FR-A-2 487 642 (FROMAGERIES BEL S.A.) <br> * page 3 - page 4; claims 1-4,6,10; example 2 * <br> --- | 1-3,9,10 | |
| X | FR-A-2 565 985 (RHONE POULENC SANTE S.A.) <br> * page 1 - page 2; claims 1-3 * <br> --- | 1-4,6,9 | |
| A | WO-A-92 21248 (DANMARK PROTEIN A.S.) <br> * page 3; claims 1,2,5,9-11 * <br> --- | 1-3,9,10 | |
| A | WO-A-92 15696 (DANMARK PROTEIN A.S.) <br> * page 2 - page 3; claims 1-5,7,13; examples 1,2 * <br> --- | 1-3,9,10 | TECHNICAL FIELDS SEARCHED (Int.Cl.5) |
| A | EP-A-0 443 763 (MEIJI MILK PRODUCTS CO LTD) <br> * page 5, line 4-15; claim 2; example 4 * <br> * page 3, line 50 - page 4, line 18 * <br> --- | 1-3,6,9, 10 | A23J <br> A23C |
| A | EP-A-0 457 565 (MORINAGA MILK INDUSTRY CO. LTD.) <br> * page 2 - page 4; claim 1 * <br> * page 15 * <br> * page 22 - page 23 * <br> & PATENT ABSTRACTS OF JAPAN <br> vol. 014, no. 377 (C-0748)15 August 1990 <br> & JP-A-02 138 991 (MORINAGA MILK INDUSTRY CO LTD) 28 May 1990 <br> * abstract * <br> --- | 1,5,6 | |

-/--

The present search report has been drawn up for all claims

| Place of search | Date of completion of the search | Examiner |
|---|---|---|
| THE HAGUE | 16 March 1994 | Kanbier, D |

EPO FORM 1503 03.82 (P04C01)

**European Patent Office**

# EUROPEAN SEARCH REPORT

Application Number

EP 93 30 9688

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| A | DE-B-23 19 581 (BOEHRINGER MANNHEIM GMBH) * the whole document * --- | 1 | |
| L | JOURNAL OF FOOD SCIENCE vol. 57, no. 5 , 1992 , CHICAGO pages 1223 - 1229 M.I. MAHMOUD ET AL 'ENZYMATIC HYDROLYSIS OF CASEIN: EFFECT OF DEGREE OF HYDROLYSIS ON ANTIGENICITY AND PHYSICAL PROPERTIES' ----- | 1-3,5,6 | |
| | | | TECHNICAL FIELDS SEARCHED (Int.Cl.5) |

The present search report has been drawn up for all claims

| Place of search | Date of completion of the search | Examiner |
|---|---|---|
| THE HAGUE | 16 March 1994 | Kanbier, D |